# EUROPEAN PATENT APPLICATION

(11) **EP 1 288 166 A1**
(43) Date of publication of application: **05.03.2003**
(21) Application number: 01870184.7
(22) Date of filing: 28.08.2001
(51) Int. Cl.: C02F 1/66, C02F 3/12

(54) **Method and system for pH control**

(71) Applicant: SEGHERS BETTER TECHNOLOGY GROUP, 2830 Willebroek (BE)
(72) Inventor: De Smedt, Marc, 2020 Antwerpen (BE); Koning, Jan, 3140 Keerbergen (BE); Aerts, Benny, 3191 Boortmeerbeek (BE); Vanhoutteghem, Peter Jozef, 3370 Boutersem (BE)
(74) Representative: Brants, Johan Philippe Emile

(57) **Abstract**

The invention relates to a method for lowering the pH of a fluid in a basin comprising an aeration system by the direct injection of liquid carbon dioxide in a conduit wherein pressurized oxygen containing gas is present, further comprising the steps of:
- providing an oxygen-containing gas at a suitable pressure in a conduit,
- injecting the liquid carbon dioxide in the same conduit and in the flow of the pressurized oxygen-containing gas, whereby the liquid carbon dioxide is evaporated and simultaneously mixed, and
- providing the mixed gas in the fluid to be treated.

The invention is further related to the use of liquid carbon dioxide to lower the pH in a fluid present in a basin provided with bubble membrane diffusers.

## Description

### Technical field

The invention relates to the field of controlling the pH of an alkaline fluid and more in particular to the treatment of wastewater so as to reduce the pH. More in particular, the invention relates to a method and a system for injecting carbon dioxide into a fluid to be treated, such as wastewater so as to reduce the pH of said fluid.

### Background of the invention

During its treatment phase several waste fluids may have a high pH level for example a pH of about 9 or even higher. In general, such a pH is unacceptable for a final treated water product and this pH must be reduced prior to allowing the treated fluid into general use. Most water treatment plants are required to maintain an effluent pH of between 6 and 9. Therefore, any fluid being treated having a pH of higher than 9 should have its pH lowered before leaving the plant.

One known method for treating these fluids so as to lower its pH is to treat said fluid with an acid compound.

Another known method for treating these fluids as to lower its pH is to introduce a suitable amount of carbon dioxide gas. Several methods currently are used to inject carbon dioxide into water. The most accepted method is to inject the carbon dioxide into water by a direct gas feed through some type of diffusion system in a basin. Mechanical mixing means may be present for providing a better efficiency. Another known method for injecting carbon dioxide into water is to aspirate the carbon dioxide into a stream of water using a venturi-type ejector.

Both the direct gas feed method and the venturi method of injecting carbon dioxide gas into water allow for a suitable control of the pH. There exists a further need to minimize the complexity of the system wherein carbon dioxide is introduced prior to the release into the basin.

### Brief summary of the invention

The invention is related to a method for lowering the pH of a fluid in a basin comprising an aeration system by the direct injection of liquid carbon dioxide in a conduit wherein pressurized oxygen containing gas is present.

The invention is related to a method and a system in which direct use is made of liquid carbon dioxide. As mentioned above when using liquid carbon dioxide as a source for the carbon dioxide gas evaporation needs to be performed. In general, these evaporations consume a considerable amount of energy and are performed in a separate device.

Due to the fact that the present invention makes it possible to inject liquid carbon dioxide directly in the flow of pressurized air this excess in the consumption of energy is no longer required. In many activated sludge processes, fluids and more in particular waste fluids, such as wastewater are added to an aeration basin in which an oxygen containing gas is introduced by a plurality of for instance fine bubble membrane diffusers, in the form of fine bubbles having a diameter of preferably less than about 4 mm. This aeration provides both the mixing to keep the solids in suspension and the oxygen required to maintain the dissolved oxygen concentration at the required set point. The mixed liquor is permanently or sequentially contacted with an oxygen-containing gas in further aeration zones. The specific use of these bubble membrane diffusers is disclosed in US 4,961,854 which is hereby incorporated by reference. In this invention, the required energy for evaporating the liquid carbon dioxide into gaseous carbon dioxide is provided by the energy or heat of the air flux. More in particular, the liquid CO₂ is preferably directly injected into the hot air stream and as a consequence thereof is immediately transformed into gaseous CO₂. The control of the supply of CO₂ is preferably regulated by an open/closed automatic valve on the CO₂ line. The mixed gas air/CO₂ or any other gas mixture CO₂/oxygen-containing gas is immediately split over the entire surface of the system through the known air diffuser systems. It is clear that the automatic valve only is opening when the pH in the reactor is too high and when the blower or compressor is running.

### Brief description of the drawings

Figure 1 is an overall schematic view of a system embodying various features of the invention for injecting liquid carbon dioxide into an oxygen-containing gas.
Figure 2 is shows the maximum CO₂ dose expressed per kg BOD as function of the temperature after the blower/compressor.

### Detailed description of the preferred embodiments

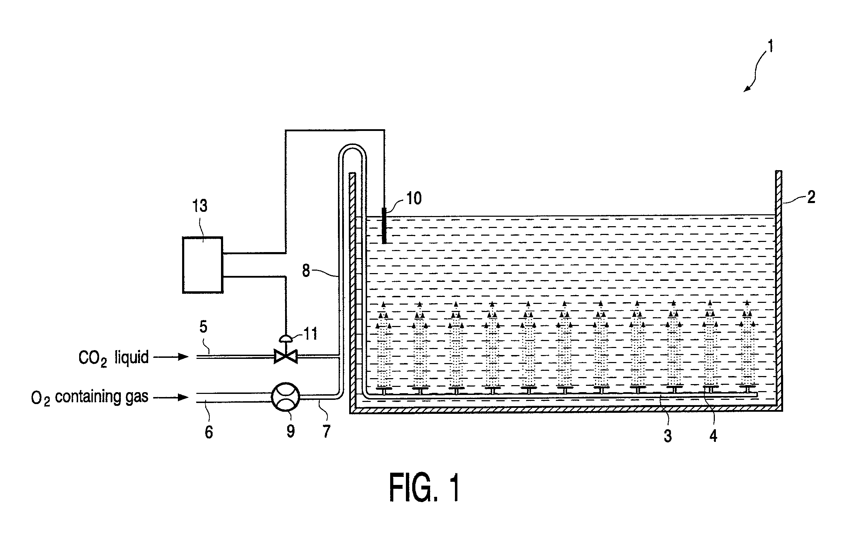

Depicted in figure 1 is a system 1 for wastewater treatment which uses liquid carbon dioxide to neutralize an alkaline stream of water. The system 1 comprises a basin 2 of preferentially 7 meters height wherein an aeration device 3 is provided, comprising several preferably fine bubble membrane diffusers 4, preferably distributed homogeneously over the whole bottom of the basin 2. Two conduits are shown one for the supply of oxygen needed for an activated sludge treatment and a pipe or a conduit 5 for the liquid CO₂. The conduit 6 for the oxygen-containing gas comprises a pump, blower or compressor 9 causing a heat flux in the area 7 of the conduit 6 which heat flux is being partly consumed by the injected liquid CO₂ which is entered in this specific position 7 and uses the available heat energy in order to evaporate. The common conduit 8 contains a mixed gas of the oxygen containing gas and of gaseous carbon dioxide and is brought to the aeration system 3. The energy which was readily available because of compression causing a heating of the oxygen-containing gas, is partly consumed by the evaporation of the liquid CO₂, which is as a consequence an energy-friendly process wherein no other sub-systems nor device, nor energy is required in order to transform the liquid CO₂ into the gaseous CO₂. Dependent upon the height of the basin a pressure differential is set for the introduced gases. In this preferential embodiment a 7 meters water column requires a pressure of approximately 0.8 bar, which may increase the temperature from about room temperature to about 70°-80°C. This increase in temperature is sufficient to vaporize the introduced liquid CO₂ into its gaseous state.

It is clear that a control device, such as a mere pH-transmitter will, dependent upon the pH in the basin, adjust the amount of liquid CO₂ which is injected. Generally, the control of the CO₂ injection is based solely on the pH, whereas the oxygen control independently occurs by a blower or compressor and the air flux. A control unit 13 calculates the required ratio CO₂/O₂ dependent upon the COD, BOD, nitrogen compounds and the measured pH by the pH meter 10. Furthermore, carbon dioxide is an acid which completely reacts with the alkaline components without leaving a salt as a formation or reaction product. It is therefore very efficient for a neutralization down to a pH of about 8.3. The use of liquid carbon dioxide is preferred due to the fact that in most industrial applications carbon dioxide is typically handled as a liquid and stored in a cryogenic vessel on the site. As stated above most known applications, in which carbon dioxide is used for neutralization of alkaline wastewater or of wastewater which becomes alkaline during biological treatment, use gaseous carbon dioxide, requiring evaporation of the liquid carbon dioxide prior to use. Separate evaporation devices which are typically achieved in an electric heat exchanger are needed or required. The gaseous CO₂ is then blown into the liquid, typically by bubbling the carbon dioxide in the water or by means of a jet aerator consisting of a pump with an ejector. The high turbulence between the water and the gas in the injector favors the dissolution of the CO₂ and reduces the loss of CO₂.

Another possibility is to use a submerged pump for the introduction of the gaseous CO₂ and the oxygen-containing gas stream in the basin.

It is clear that several advantages reside from the direct injection of the liquid CO₂ into the energy rich area of the oxygen-containing gas. There is no need for evaporation devices, such as electrical heat exchangers for the evaporation of the liquid CO₂, which lowers the investment and the operation costs. An immediate distribution over the entire surface of the basin is created with no need for supplementary injection devices. This is in contrast with conventional systems requiring a separate diffusion system and/or injecting the CO₂ in only one single point.

A further consequence of the method according to the invention is that a very quick reaction and a very short response time is needed to lower the pH in the basin.

Another possibility of the method according to the invention is to minimize the loss of CO₂ by ceasing the injection of CO₂ once a pH close to 8.3 is reached. Due to the fact that a short response time is available, the valve will close immediately and therefore limit the loss of any CO₂ at a low pH due to stripping.

### Example

A typical wastewater treatment plant treating 500 kg BOD/day, equipped with bubble aeration and in which the air after the blower or compressor has a temperature of 80°C allows to dose between 500 x 80 x 5/24 = 8333 and 500 x 80 x 14/24 = 23,333 equivalents of acid (as C02) per hour. If the wastewater flow is 50 m3/h, this corresponds to 167 and 466 milli-equivalent per liter, which is a much higher dose than required in any application on industrial or municipal wastewater.

Table 1 summarizes the technical data of the above example and demonstrates that the heat capacity of the compressed air is more than enough for the evaporation of the liquid carbon dioxide.

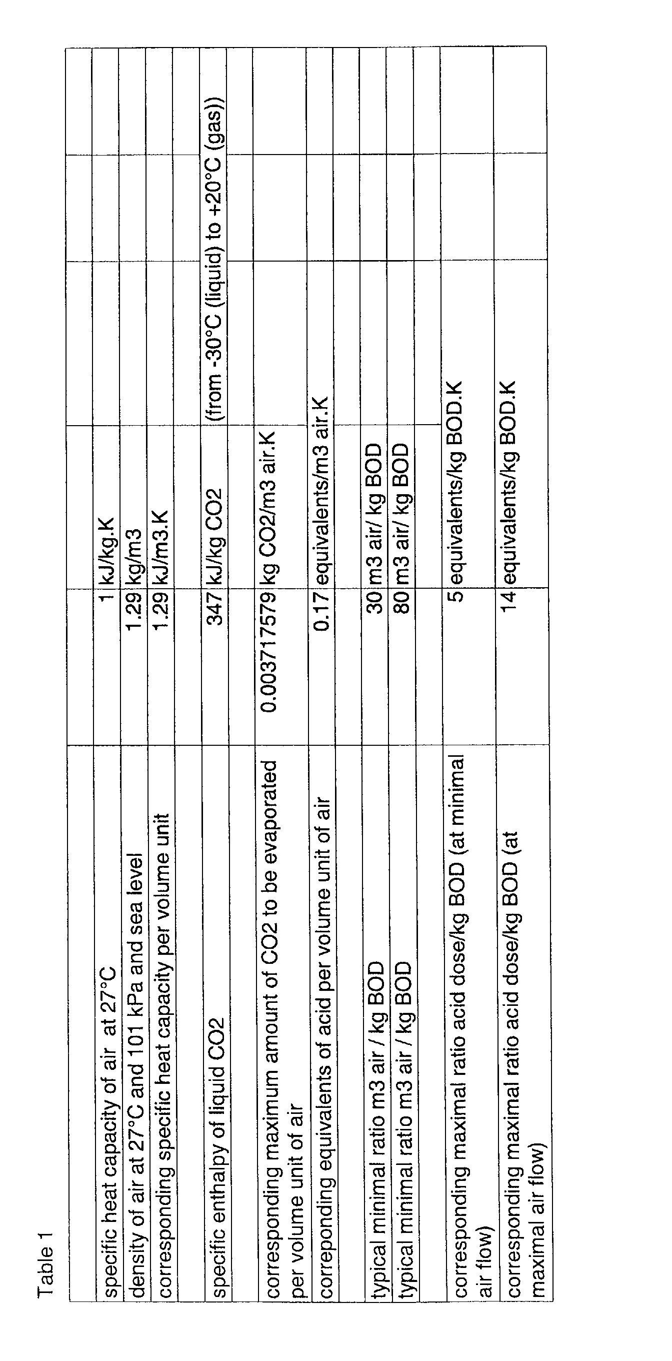

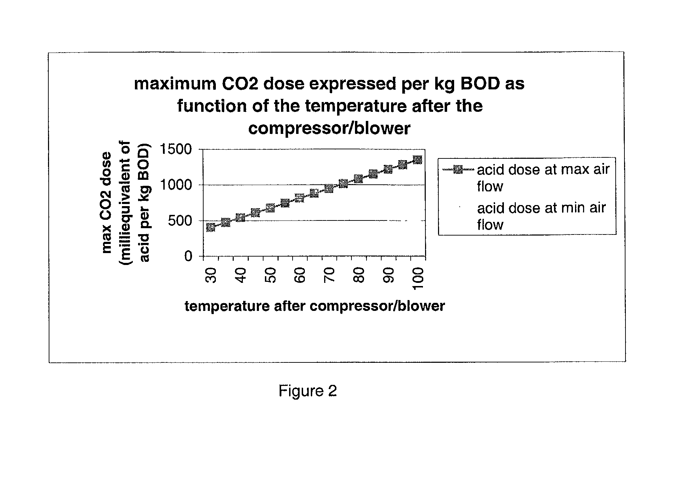

In table 2 the results are shown of the maximum C02 dose expressed per kg BOD as function of the temperature after the blower/compressor. The graphical results are shown in figure 2.

**Table 2**

| temp after blower/compressor | acid dose at max air flow | acid dose at min air flow |
|---|---|---|
| 30 | 406 | 152 |
| 35 | 473 | 177 |
| 40 | 541 | 203 |
| 45 | 608 | 228 |
| 50 | 676 | 253 |
| 55 | 744 | 279 |
| 60 | 811 | 304 |
| 65 | 879 | 330 |
| 70 | 946 | 355 |
| 75 | 1014 | 380 |
| 80 | 1081 | 406 |
| 85 | 1149 | 431 |
| 90 | 1217 | 456 |
| 95 | 1284 | 482 |
| 100 | 1352 | 507 |

## Claims

1. Method for lowering the pH of a fluid in a basin comprising an aeration system by the direct injection of liquid carbon dioxide in a conduit wherein pressurized oxygen containing gas is present.

2. Method according to claim 1, further comprising the steps of:
- providing an oxygen-containing gas at a suitable pressure in a conduit,
- injecting the liquid carbon dioxide in the same conduit and in the flow of the pressurized oxygen-containing gas, whereby the liquid carbon dioxide is evaporated and simultaneously mixed, and
- providing the mixed gas in the fluid to be treated.

3. Method according to claim 1 or 2, wherein the aeration system is positioned at the bottom of the basin.

4. Method according to claim 1, 2 or 3, wherein the aeration system comprises a set of fine bubble membrane diffusers.

5. Method according to any of the previous claims 1-4, wherein the oxygen-containing gas consists essentially of air.

6. Method according to any of the previous claims 1-5, wherein the aeration basin may serve for general carbon dioxide injection.

7. Use of liquid carbon dioxide to lower the pH in a fluid present in a basin provided with bubble membrane diffusers.

8. Use of liquid carbon dioxide according to claim 7, in which the liquid CO₂ is directly injected in a stream of oxygen containing gas.
